# EUROPÄISCHE PATENTSCHRIFT

(11) **EP 3 271 967 B1**
(45) Veröffentlichungstag und Bekanntmachung des Hinweises auf die Patenterteilung: **11.08.2021**
(21) Anmeldenummer: 16710150.0
(22) Anmeldetag: 15.03.2016
(51) Int. Cl.: G01S 17/931, G02B 7/02, G01S 7/481, H01Q 15/08

(54) **LINSENVORRICHTUNG FÜR EINEN OPTOELEKTRONISCHEN SENSOR EINES KRAFTFAHRZEUGS MIT BEFESTIGUNGSEINRICHTUNG, OPTOELEKTRONISCHER SENSOR, KRAFTFAHRZEUG SOWIE VERFAHREN**
LENS DEVICE FOR AN OPTOELECTRONIC SENSOR OF A MOTOR VEHICLE COMPRISING A SECURING UNIT, OPTOELECTRONIC SENSOR, MOTOR VEHICLE AND METHOD
ENSEMBLE LENTILLE POUR CAPTEUR OPTOÉLECTRONIQUE D'UN VÉHICULE À MOTEUR AVEC DISPOSITIF DE FIXATION, CAPTEUR OPTOÉLECTRONIQUE, VÉHICULE À MOTEUR ET PROCÉDÉ

(30) Priorität: 20.03.2015 DE 102015104212
(43) Veröffentlichungstag der Anmeldung: 24.01.2018
(73) Patentinhaber: Valeo Schalter und Sensoren GmbH, 74321 Bietigheim-Bissingen (DE)
(72) Erfinder: LIST, Gerald, 74321 Bietigheim-Bissingen (DE); HARTMANN, Werner, 74321 Bietigheim-Bissingen (DE); HORVATH, Peter, 74321 Bietigheim-Bissingen (DE)
(74) Vertreter: Kluth, Philipp
(86) Internationale Anmeldenummer: PCT/EP2016/055491
(87) Internationale Veröffentlichungsnummer: WO 2016/150753

(56) Entgegenhaltungen:
- DE-A1- 4 412 770
- DE-A1- 19 623 426
- DE-A1-102012 006 869
- DE-C1- 19 703 095
- US-A1- 2003 197 959

## Beschreibung

Die vorliegende Erfindung betrifft eine Linsenvorrichtung für einen optoelektronischen Sensor eines Kraftfahrzeugs mit einer Empfangslinse, mit einer Stützeinrichtung, an welcher eine Rückseite der Empfangslinse bereichsweise anliegt, mit einer Befestigungseinrichtung, mittels welcher die Empfangslinse mit einer in eine erste Richtung wirkende Federkraft an der Stützeinrichtung gehalten ist. Überdies betrifft die vorliegende Erfindung einen optoelektronischen Sensor mit einer solchen Linsenvorrichtung. Die Erfindung betrifft außerdem ein Kraftfahrzeug mit einem solchen optoelektronischen Sensor. Schließlich betrifft die vorliegende Erfindung ein Verfahren zum Montieren einer Linsenvorrichtung.

Das Interesse richtet sich vorliegend insbesondere auf Linsenvorrichtungen für optoelektronische Sensoren. Derartige optoelektronische Sensoren können beispielsweise als Lidar-Sensoren (Lidar - light detection and ranging) oder als Laserscanner ausgebildet sein. Solche optoelektronischen Sensoren werden beispielsweise an Kraftfahrzeugen angebracht, um während der Fahrt beziehungsweise im Betrieb des Kraftfahrzeugs die Umgebung des Kraftfahrzeugs zu erfassen. Bei dem optoelektronischen Sensor handelt es sich dabei um eine abtastende optische Messvorrichtung, mittels welcher Objekte beziehungsweise Hindernisse in dem Umgebungsbereich des Kraftfahrzeugs erfasst werden können. Beispielsweise kann mit dem optoelektronischen Sensor ein Abstand zwischen dem Kraftfahrzeug und dem Objekt nach dem Lichtimpulslaufzeitverfahren gemessen werden. Der optoelektronische Sensor umfasst üblicherweise eine Sendeeinheit, die beispielsweise eine Laserdiode aufweist, mit der ein optisches Sendesignal ausgesendet werden kann. Darüber hinaus umfasst der optoelektronische Sensor eine entsprechende Empfangseinheit, welche beispielsweise zumindest eine Photodiode aufweist, mittels welcher das von einem Objekt reflektierte Sendesignal als Empfangssignal empfangen werden kann. In Ausbreitungsrichtung vor der Empfangseinheit ist die Empfangslinse angeordnet.

Aus dem Stand der Technik sind Linsenvorrichtungen bekannt, bei denen die Empfangslinse mit Hilfe einer entsprechenden Befestigungseinrichtung an einer Stützeinrichtung gehalten ist. Hierzu kann die Empfangslinse beispielsweise mittels eines Halterahmens aus Aluminium an der Stützeinrichtung gehalten werden. Dazu kann der Halterahmen beispielsweise nach der Montage mit der Stützeinrichtung verklebt werden.

Das Problem hierbei ist, dass der Seitenbereich beziehungsweise die seitlichen Flächen der Empfangslinse offen für Streulicht sind. Um das Einkoppeln von Streulicht in die Empfangslinse in den Seitenbereichen zu verhindern, kann der Seitenbereich nach der Montage entsprechend abgeklebt werden. Weiterhin nachteilig an einer derartigen Befestigungseinrichtung ist der Aspekt zu sehen, dass der Halterahmen keine Toleranzen beziehungsweise Dimensionsänderungen infolge von Temperaturschwankungen ausgleichen kann.

In diesem Zusammenhang beschreibt die DE 10 2012 006 869 A1 eine optoelektronische Sensoreinrichtung, insbesondere einen Laserscanner beziehungsweise ein Lidar-Gerät, für ein Kraftfahrzeug. Die optoelektronische Sensoreinrichtung umfasst eine Halteeinrichtung zum Halten der Empfangslinse und eine Blende zur Reduktion der Intensität des Empfangssignals. Dabei ist die Blende an der Halteeinrichtung gehalten. Es kann auch vorgesehen sein, dass die Blende als Federelement ausgebildet ist, mittels welchem die Empfangslinse an einem Rahmen mit einer Federkraft verspannt ist.

Die DE 197 03 095 C1 beschreibt ein Kraftfahrzeug-Radarsystem mit einer dielektrischen Linse, die zerstörungsfrei wieder lösbar an einem Gehäuse oder Gehäuseteil des Kraftfahrzeug-Radarsystems befestigt wird.

Die US 2003/0197959 A1 offenbart eine Optikanordnung für Laserscanvorrichtungen für Laserdrucker. Die Optikanordnung umfasst eine Linse, die mit einer Federklammer befestigt wird.

Es ist Aufgabe der vorliegenden Erfindung, eine Lösung aufzuzeigen, die eine Linsenvorrichtung für einen optoelektronischen Sensor der eingangs genannten Art kostengünstiger bereitgestellt werden kann.

Diese Aufgabe wird erfindungsgemäß durch eine Linsenvorrichtung, durch einen optoelektronischen Sensor, durch ein Kraftfahrzeug sowie durch ein Verfahren mit den Merkmalen gemäß den unabhängigen Patentansprüchen gelöst. Vorteilhafte Ausführungen der Erfindung sind Gegenstand der abhängigen Patentansprüche, der Beschreibung und der Figuren.

Eine erfindungsgemäße Linsenvorrichtung für einen optoelektronischen Sensor eines Kraftfahrzeugs umfasst eine Empfangslinse. Darüber hinaus umfasst die Linsenvorrichtung eine Stützeinrichtung, an welcher eine Rückseite der Empfangslinse bereichsweise anliegt. Darüber hinaus umfasst die Linsenvorrichtung eine Befestigungseinrichtung, mittels welcher die Empfangslinse mit einer in eine erste Richtung wirkende Federkraft an der Stützeinrichtung gehalten ist. Die Befestigungseinrichtung weist einen Halterahmen auf, welcher die Empfangslinse zumindest bereichsweise umgibt. Darüber hinaus weist die Befestigungseinrichtung zumindest ein Federelement auf, welches die Empfangslinse gegenüber dem Halterahmen in zumindest einer von der ersten Richtung verschiedenen zweiten Richtung abstützt.

Die Linsenvorrichtung dient der Verwendung in einem optoelektronischen Sensor eines Kraftfahrzeugs. Insbesondere kann die Linsenvorrichtung in einem Lidar-Sensor oder einem Laserscanner eingesetzt werden. Die Linsenvorrichtung umfasst die Empfangslinse, die beispielsweise in Ausbreitungsrichtung des Empfangssignals des optoelektronischen Sensors vor einer Empfangseinheit angeordnet ist. Die Empfangslinse kann beispielsweise aus einem Glas oder aus einem Kunststoff gefertigt sein. Die Empfangslinse kann eine im Wesentlichen flache Rückseite, welche der Empfangseinheit zugewandt ist, und eine Vorderseite mit einer entsprechenden Krümmung auf. Ferner weist die Linsenvorrichtung eine Stützeinrichtung auf, die insbesondere rahmenförmig ausgebildet sein kann. Dabei ist die Empfangslinse mit ihrer Rückseite an der Stützeinrichtung abgestützt.

Darüber hinaus umfasst die Linsenvorrichtung die Befestigungseinrichtung, mittels welcher die Empfangslinse an der Stützeinrichtung entlang einer ersten Richtung federnd gehalten ist. Die Befestigungseinrichtung umfasst einen Halterahmen, welcher die Empfangslinse zumindest bereichsweise umgibt. Insbesondere kann der Halterahmen die Empfangslinse vollständig umgeben. Die Empfangslinse kann also innerhalb des Halterahmens angeordnet sein. Darüber hinaus umfasst die Befestigungseinrichtung zumindest ein Federelement, mittels welchem die Empfangslinse gegenüber dem Halterahmen abgestützt ist. Dabei ist die Empfangslinse in einer ersten Richtung mit einer Federkraft an der Stützeinrichtung gehalten. Die erste Richtung kann beispielsweise senkrecht zu der Rückseite der Empfangslinse verlaufen. Mit dem zumindest einen Federelement ist die Empfangslinse entlang zumindest einer zweiten Richtung gegenüber dem Halterahmen abgestützt. Die Empfangslinse kann auch entlang einer dritten Richtung gegenüber dem Halterahmen abgestützt sein. Die zweite und/oder die dritte Richtung können beispielsweise im Wesentlichen senkrecht zu der ersten Richtung verlaufen.

Durch das Federelement ist die Empfangslinse gegenüber dem Halterahmen federnd gehalten. Somit kann durch das Federelement erreicht werden, dass die Empfangslinse innerhalb des Halterahmens zentriert wird. Darüber hinaus kann durch die federnde Ausgestaltung des Federelements beziehungsweise die elastische Verformbarkeit des Federelements erreicht werden, dass Dimensionsänderungen der Linsenvorrichtung beziehungsweise der Bauteile der Linsenvorrichtung infolge von Temperatureinwirkungen ausgeglichen werden können. Ferner kann mit Hilfe des Federelements eine definierte Haltekraft auf die Empfangslinse ausgeübt werden. Zudem können Fertigungstoleranzen, Vibrationen im Betrieb des Kraftfahrzeugs oder sonstige Einwirkungen kompensiert werden.

Bevorzugt stellt das zumindest eine Federelement die in die erste Richtung wirkende Federkraft zum Halten der Empfangslinse der Stützeinrichtung bereit. Mittels des zumindest einen Federelements ist die Empfangslinse gegenüber der Stützeinrichtung, beispielsweise einer Auflagefläche der Stützeinrichtung, also entlang der ersten Richtung federnd gelagert. Das Federelement dient somit einerseits zur federnden Befestigung der Empfangslinse und andererseits dazu, die Empfangslinse innerhalb des Halterahmens zu zentrieren. Somit kann ein zuverlässiger Betrieb der Linsenvorrichtung in dem optoelektronischen Sensor garantiert werden. Zudem kann ein derartiges Federelement kostengünstig bereitgestellt werden.

Erfindungsgemäß schirmt der Halterahmen die Empfangslinse in einem vorbestimmten Seitenbereich umfangsseitig umgibt und den vorbestimmten Seitenbereich vor optischer Strahlung ab. Die Empfangslinse kann einen vorbestimmten Seitenbereich aufweisen, in dem die Empfangslinse mit der Befestigungseinrichtung gehalten wird. In dem vorbestimmten Seitenbereich kann die Empfangslinse im Wesentlichen quaderförmig ausgebildet sein. Dabei ist der Halterahmen derart ausgebildet, dass er den vorbestimmten Seitenbereich der Empfangslinse insbesondere vollständig umgibt. Somit kann verhindert werden, dass optische Strahlung beziehungsweise Streulicht in den vorbestimmten Seitenbereich von außen in die Empfangslinse eintritt. Dieses Streulicht kann beispielsweise Licht im infraroten Wellenlängenbereich und/oder im sichtbaren Wellenlängenbereich sein. Somit kann verhindert werden, dass Streulicht zu der Empfangseinheit des optoelektronischen Sensors gelangt. Somit kann ein zuverlässiger Betrieb des optoelektronischen Sensors garantiert werden.

Weiterhin ist es vorteilhaft, wenn die Stützeinrichtung ein Halteelement aufweist und die Befestigungseinrichtung ein zu dem Halteelement korrespondierendes Befestigungselement aufweist, wobei die Empfangslinse durch ein Zusammenwirken des Halteelements mit dem Befestigungseinrichtung in der ersten Richtung an der Stützeinrichtung gehalten ist. Das Halteelement der Stützeinrichtung kann beispielsweise eine entsprechende Erhebung beziehungsweise Haltenase sein. Das Befestigungselement der Befestigungseinrichtung kann eine entsprechende Aussparung aufweisen. Somit kann das Befestigungselement der Befestigungseinrichtung quasi an dem Halteelement eingehakt werden. Alternativ kann es auch vorgesehen sein, dass das Halteelement eine entsprechende Aussparung aufweist und das Befestigungselement eine zu der Ausnehmung korrespondierende Erhebung aufweist. Beim Befestigen der Linseneinrichtung an der Stützeinrichtung kann die Befestigungseinrichtung in die erste Richtung ausgelenkt werden und hierbei das zumindest eine Federelement komprimiert werden. Anschließend kann das Halteelement mit dem korrespondierenden Befestigungselement verbunden werden.

Bevorzugt umfasst das Federelement oder der Halterahmen das Befestigungselement. Wenn das Halteelement eine entsprechende Erhebung aufweist, kann das korrespondierende Befestigungselement beispielsweise nach Art einer Lasche ausgebildet sein, die an dem Halteelement eingehakt werden kann. Dieses Befestigungselement beziehungsweise diese Lasche kann nun entweder an dem Federelement oder an dem Halterahmen oder an beiden ausgebildet sein. Auf diese Weise kann eine einfache und kostengünstige Verbindung zwischen der Stützeinrichtung und der Befestigungseinrichtung gewährleistet werden.

In einer Ausführungsform weist die Befestigungseinrichtung einen Federdraht auf, wobei zumindest ein erster Bleich des Federdrahts das zumindest eine Federelement ausbildet. Der Federdraht kann beispielsweise aus einem entsprechenden Metall oder Metalldraht gefertigt sein. Der Federdraht kann elastisch verformbar ausgebildet sein. Beispielsweise kann der Federdraht in dem ersten Bereich beziehungsweise Teilbereich eine entsprechende Krümmung aufweisen, sodass der erste Bereich des Federdrahts im Vergleich zu dem übrigen Federdraht eine Form einer Lasche ausbildet. Somit kann auf einfache und kostengünstige Weise das Federelement bereitgestellt werden.

In einer weiteren Ausführungsform weist der Halterahmen zumindest eine Ausnehmung auf, in welcher zumindest ein zweiter Bereich des Federdrahts derart angeordnet ist, dass dieser an dem Halterahmen in der ersten Richtung gehalten ist. Der Halterahmen kann beispielsweise aus einem Blech gebildet sein. Der Halterahmen kann insbesondere als Stanz- und Biegeteil ausgebildet sein. Die Ausnehmungen beziehungsweise Aussparungen können beispielsweise in den Ecken des Halterahmens vorgesehen sein. Somit kann der Federdraht ohne zusätzliches Verbindungselement formschlüssig über die Aussparungen in den Ecken in dem Halterahmen einrasten.

In einer weiteren Ausführungsform ist der Halterahmen einteilig mit dem zumindest einen Federelement ausgebildet. Der Halterahmen und das zumindest eine Federelement können zusammen aus einem entsprechenden Blech gebildet sein, das durch einen Stanz- und Biegeprozess hergestellt wird. Das zumindest eine Federelement kann dann die Linseneinrichtung sowohl entlang der ersten Richtung als auch entlang der zweiten Richtung federnd abstützen. Somit kann die Befestigungseinrichtung einfach und kostengünstig hergestellt werden.

Ein erfindungsgemäßer optoelektronischer Sensor für ein Kraftfahrzeug umfasst eine erfindungsgemäße Linsenvorrichtung. Der optoelektronische Sensor kann insbesondere als Lidar-Sensor oder als Laserscanner ausgebildet sein. Der optoelektronische Sensor kann eine Sendeeinheit zum Aussenden eines optischen Sendesignals und eine Empfangseinheit zum Empfangen des von einem Objekt reflektierten Sendesignals als Empfangssignal aufweisen.

Ein erfindungsgemäßes Kraftfahrzeug umfasst zumindest einen erfindungsgemäßen optoelektronischen Sensor. Der optoelektronische Sensor kann beispielsweise Teil eines Fahrerassistenzsystems des Kraftfahrzeugs sein. Mit dem optoelektronischen Sensor kann ein Abstand zu einem Objekt beziehungsweise Hindernis in einem Umgebungsbereich des Kraftfahrzeugs erfasst werden. Das Kraftfahrzeug kann insbesondere als Personenkraftwagen ausgebildet sein.

Ein erfindungsgemäßes Verfahren dient zum Montieren einer Linsenvorrichtung für einen optoelektronische Sensor eines Kraftfahrzeugs. Hierbei wird eine Empfangslinse derart an einer Stützeinrichtung angeordnet, dass eine Rückseite der Empfangslinse bereichsweise an dieser anliegt. Zudem wird eine Befestigungseinrichtung derart an der die Empfangslinse angeordnet, dass die Empfangslinse mit einer in eine erste Richtung wirkende Federkraft an der Stützeinrichtung gehalten wird. Die Befestigungseinrichtung weist einen Halterahmen, welcher die Empfangslinse zumindest bereichsweise umgibt, und zumindest ein Federelement, mittels welchem die Empfangslinse gegenüber dem Halterahmen in zumindest einer von der ersten Richtung verschiedenen, zweiten Richtung abstützt wird, auf.

Die mit Bezug auf die erfindungsgemäße Linsenvorrichtung vorgestellten bevorzugten Ausführungsformen und deren Vorteile gelten entsprechend für den erfindungsgemäßen optoelektronischen Sensor, das erfindungsgemäße Kraftfahrzeug sowie das erfindungsgemäße Verfahren.

Die Erfindung wird nun anhand von bevorzugten Ausführungsbeispielen sowie unter Bezugnahme auf die beigefügten Zeichnungen näher erläutert.

Dabei zeigen:
- Fig. 1: einen optoelektronischen Sensor für ein Kraftfahrzeug, welcher eine Linsenvorrichtung aufweist, in einer schematischen Darstellung;
- Fig. 2: die Linsenvorrichtung gemäß einer ersten Ausführungsform in einer Perspektivansicht;
- Fig. 3: die Stützeinrichtung der Linsenvorrichtung gemäß Fig. 2 in einer Perspektivansicht;
- Fig. 4: eine Befestigungseinrichtung der Linsenvorrichtung gemäß Fig. 2 in einer Perspektivansicht, wobei die Befestigungseinrichtung einen Halterahmen und einen Federdraht umfasst;
- Fig. 5: ein Halteelement der Stützeinrichtung im Zusammenwirken mit einem Befestigungselement der Befestigungseinrichtung der Linsenvorrichtung gemäß Fig. 2;
- Fig. 6: die Linsenvorrichtung gemäß einer zweiten Ausführungsform in einer Perspektivansicht;
- Fig. 7: das Halteelement und das Befestigungselement der Linsenvorrichtung gemäß Fig. 6;
- Fig. 8: die Linsenvorrichtung gemäß einer dritten Ausführungsform in einer Perspektivansicht; und
- Fig. 9: das Befestigungselement der Linsenvorrichtung gemäß Fig. 8.

In den Figuren werden gleiche und funktionsgleiche Elemente mit den gleichen Bezugszeichen versehen.

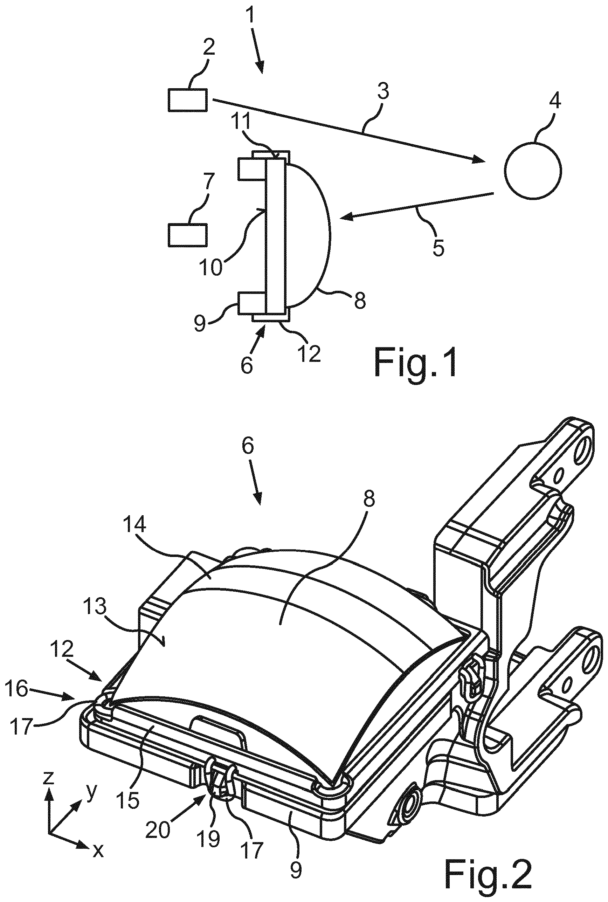

Fig. 1 zeigt einen optoelektronischen Sensor 1 für ein Kraftfahrzeug in einer schematischen Darstellung. Der optoelektronische Sensor 1 kann beispielsweise ein Lidar-Sensor oder ein Laserscanner sein. Der optoelektonische Sensor 1 kann an dem Kraftfahrzeug angeordnet werden. Der optoelektronische Sensor 1 umfasst eine Sendeeinheit 2, mit der ein optisches Sendesignal 3 in Form von Laserstrahlung ausgesendet werden kann. Ferner kann eine hier nicht dargestellte Ablenkeinrichtung beziehungsweise ein Spiegel vorgesehen sein, mit der das Sendesignal 3 beziehungsweise die Laserstrahlung abgelenkt werden kann. Das von der Sendeeinrichtung 2 ausgesendete Sendesignal trifft auf ein Objekt 4 beziehungsweise ein Hindernis, das sich beispielsweise in einem Umgebungsbereich des Kraftfahrzeugs befinden kann. Das Sendesignal 3 wird an dem Objekt 4 reflektiert und gelangt als Empfangssignal 5 zu einer Linsenvorrichtung 6 und anschließend zu einer Empfangseinrichtung 7. Die Empfangseinrichtung 7 kann beispielsweise eine Photodiode sein.

Die Linsenvorrichtung 6 umfasst eine Empfangslinse 8. Die Empfangslinse 8 kann beispielsweise aus einem Glas oder einem Kunststoff gefertigt sein. Die Empfangslinse 8 ist an einer Stützeinrichtung 9 abgestützt. Die Stützeinrichtung 9 kann beispielsweise rahmenförmig ausgebildet sein. Dabei liegt die Empfangslinse 8 mit ihrer Rückseite 10 zumindest bereichsweise an der Stützeinrichtung 9 an. Die Empfangslinse 8 umfasst ferner einen Seitenbereich 11, an dem eine Befestigungseinrichtung 12 angeordnet ist. Wie nachfolgend näher erläutert, ist die Empfangslinse 8 mittels der Befestigungseinrichtung 12 federnd an der Stützeinrichtung 9 gehalten.

Fig. 2 zeigt die Linsenvorrichtung 6 gemäß einer ersten Ausführungsform in einer Perspektivansicht. Hierbei ist auf einer Oberseite 13 der Empfangslinse 8 eine Blende 14 angeordnet. Die Blende 14 kann beispielsweise durch eine entsprechende Lackierung beziehungsweise Lackschicht gebildet sein. Ferner ist in Fig. 2 die Stützeinrichtung 9 zu erkennen, die im Wesentlichen rahmenförmig ausgebildet ist. Zudem ist die Befestigungseinrichtung 12 gezeigt, die in dem vorliegenden Ausführungsbeispiel einen Halterahmen 15 und ein Federelement 16 in Form eines Federdrahts 17 umfasst. Mittels der Befestigungseinrichtung 12 ist die Empfangslinse 8 in einer ersten Richtung z federnd an der Stützeinrichtung 9 gehalten.

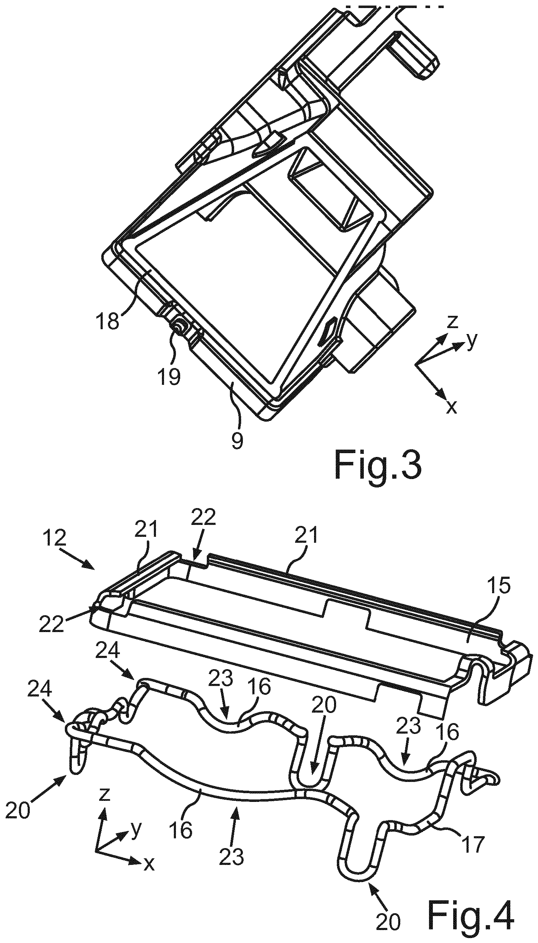

Fig. 3 zeigt die Stützeinrichtung 9 der Linsenvorrichtung 6 in einer Perspektivansicht. Dabei ist zu erkennen, dass die Stützeinrichtung 9 im Wesentlichen rahmenförmig ausgebildet ist. Die Stützeinrichtung 9 kann an dem Kraftfahrzeug befestigt werden und kann hierzu eine Kraftfahrzeug-Befestigungseinrichtung aufweisen. Die Stützeinrichtung 9 weist eine Auflagefläche 18 auf, auf der die Empfangslinse 8 mit ihrer Rückseite bereichsweise angeordnet werden kann. Ferner weist die Stützeinrichtung 9 ein Halteelement 19 in Form einer Erhebung beziehungsweise Haltenase auf, an dem die Befestigungseinrichtung 12 beziehungsweise ein Befestigungselement 20 der Befestigungseinrichtung 12 angeordnet werden kann.

Fig. 4 zeigt die Befestigungseinrichtung 12 der Linsenvorrichtung 6 gemäß Fig. 2 in einer Perspektivansicht. Hierbei ist insbesondere der Halterahmen 15 zu erkennen, der beispielsweise aus einem Metallblech gefertigt ist. Der Halterahmen 15 weist in seinem oberen Bereich entsprechende Laschenelemente 21 auf, durch welche die in dem Halterahmen 15 angeordnete Empfangslinse 8 entlang der ersten Richtung z gehalten werden kann. Der Federdraht 17 ist derart verformt beziehungsweise gebogen, dass erste Bereiche 23 des Federdrahts 17 jeweils das Federelement 16 ausbilden. In den ersten Bereichen 23 weist der Federdraht eine vorbestimmte Krümmung in der ersten Richtung z auf. In dem vorliegenden Ausführungsbeispiel bildet der Federdraht 17 drei Federelemente 16 aus. Die Empfangslinse 8 kann entlang der ersten Richtung z zwischen dem Federdraht 17 und der Stützeinrichtung 9 angeordnet werden. Darüber hinaus weist der Halterahmen 15 in den Eckenbereichen entsprechende Ausnehmungen 22 auf, in die der Federdraht 17 formschlüssig eingerastet werden kann. Hierzu ist der Federdraht 17 derart gebogen, dass zweite Teile 24 des Federdrahts 17 in die korrespondierenden Ausnehmungen 22 des Halterahmens 15 eingebracht werden können. Zudem ist der Federdraht 17 derart gebogen, dass er entsprechende Befestigungselemente 20 ausbildet, die in die korrespondierenden Halteelemente 19 der Stützeinrichtung 9 eingehakt werden können.

Mittels der Federelemente 16 kann die Empfangslinse 8 gegenüber der Stützeinrichtung 9 in der ersten Richtung z federnd gehalten werden. Der Federdraht 17 beziehungsweise das Federelement 16 zentriert die Empfangslinse 8 zudem in dem Halterahmen 15. Damit wird die Empfangslinse 8 mittels des Federelements 16 in eine zweite Richtung x und/oder eine dritte Richtung y gegenüber dem Halterahmen 15 abgestützt. Die zweite und die dritte Richtung x, y verlaufen im Wesentlichen senkrecht zu der ersten Richtung z. Somit können Fertigungstoleranzen oder temperaturbedingte Ausdehnungen bei den einzelnen Bauteilen der Linsenvorrichtung 6 ausgeglichen werden. Zudem können Vibrationen oder Erschütterungen, die beispielsweise bei der Fahrt des Kraftfahrzeugs entstehen, gedämpft werden.

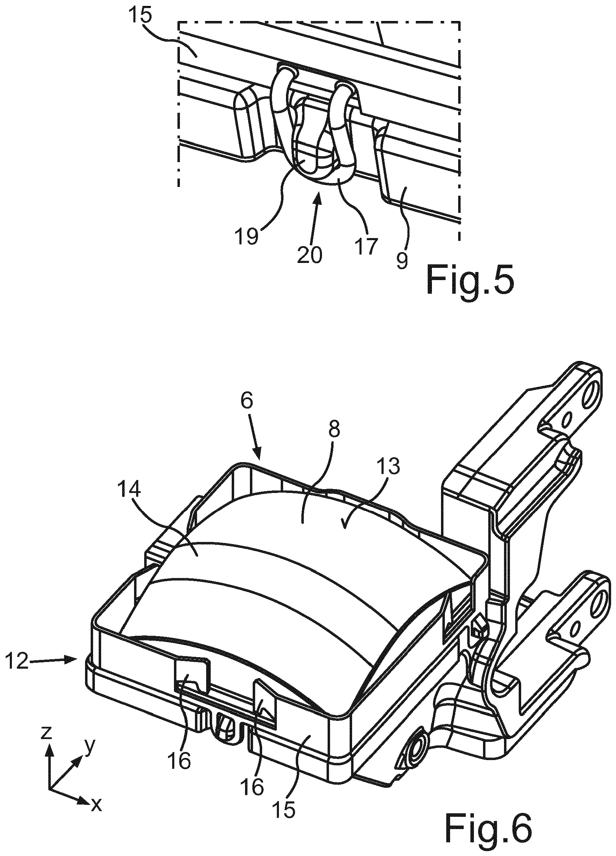

Fig. 5 zeigt eine Detailansicht der Linsenvorrichtung 6 gemäß Fig. 2, wobei das Zusammenwirken des Halteelements 19 und des Befestigungselements 20 gezeigt ist. Hier ist zu erkennen, wie das Befestigungselement 20 beziehungsweise eine Lasche des Federdrahts 17 durch das Halteelement 19 beziehungsweise die Haltenase gehalten ist. Bei dem Montieren der Linsenvorrichtung 6 kann die Befestigungsvorrichtung 12, welche die Empfangslinse 8 bereichsweise umgibt, in die erste Richtung z bewegt werden, so dass das zumindest eine Federelement 16 elastisch verformt wird. Somit kann das Befestigungselement 20 an dem Halteelement 19 eingehakt werden.

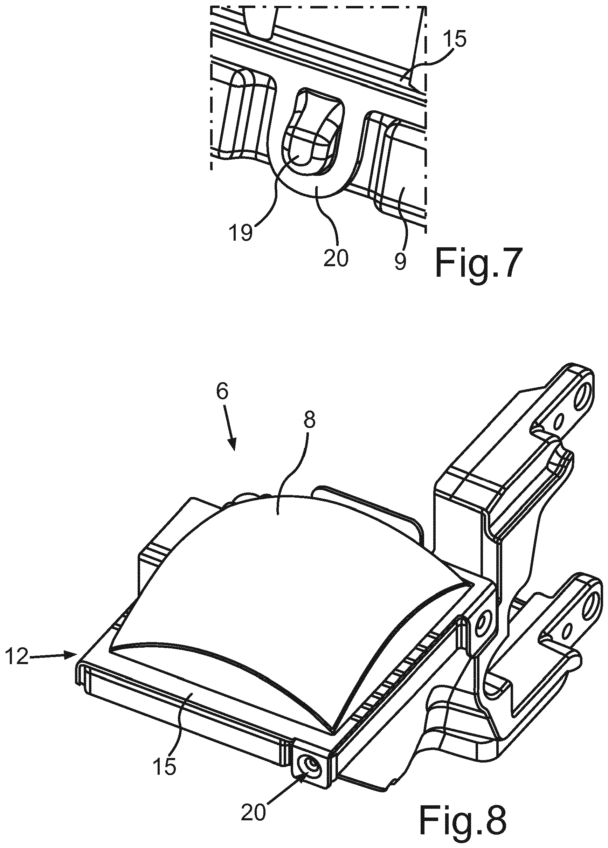

Fig. 6 zeigt eine Linsenvorrichtung 6 in einer zweiten Ausführungsform. Hierbei sind der Halterahmen 15 und die Federelemente 16 einteilig ausgebildet. Zudem ist das Befestigungselement 20 einteilig mit dem Halterahmen 15 ausgebildet. Die Befestigungsvorrichtung 12 kann aus einem Metallblech mittels eines Stanz- und Biegeprozesses hergestellt sein. Die jeweiligen Federelemente 16 sind als Laschen ausgebildet, welche einerseits die Empfangslinse 8 in der ersten Richtung z federnd an der Befestigungseinrichtung 9 halten und andererseits die Empfangslinse 8 in dem Halterahmen 15 entlang der zweiten und/oder dritten Richtung x, y zentrieren. Fig. 7 zeigt eine Detailansicht der Linsenvorrichtung gemäß Fig. 6, wobei das Zusammenwirken des Befestigungselements 20 mit dem Halteelement 19 der Stützeinrichtung 9 dargestellt ist.

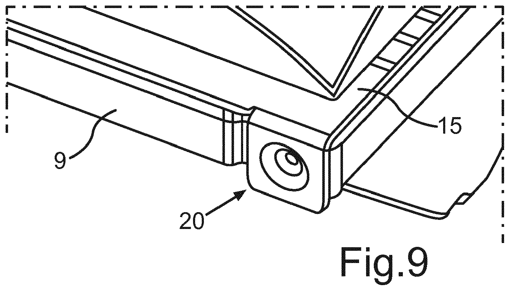

Fig. 8 zeigt eine Linsenvorrichtung 6 gemäß einer dritten Ausführungsform. Hierbei ist der Halterahmen 15 einteilig mit dem Befestigungselement 20 ausgebildet. Die Linsenvorrichtung 6 kann zudem einen Federdraht 17 oder an anderes Federelement 16 aufweisen, das zumindest bereichsweise innerhalb des Halterahmens 15 angeordnet ist. Die Befestigungselemente 20 sind in diesem Fall als sogenannte Prägewarzen ausgebildet, die in korrespondierende, hier nicht dargestellte, Aussparungen in der Stützeinrichtung 9 eingerastet werden können. Eine Detailansicht der Befestigungseinrichtung 12 der Linsenvorrichtung gemäß Fig. 8 ist in Fig. 9 gezeigt.

## Patentansprüche

1. Linsenvorrichtung (6) für einen optoelektronischen Sensor (1) eines Kraftfahrzeugs mit einer Empfangslinse (8), mit einer Stützeinrichtung (9), an welcher eine Rückseite (10) der Empfangslinse (8) bereichsweise anliegt, und mit einer Befestigungseinrichtung (12), mittels welcher die Empfangslinse (8) mit einer in eine erste Richtung ,z, wirkende Federkraft an der Stützeinrichtung (9) gehalten ist,
**dadurch gekennzeichnet, dass**
die Befestigungseinrichtung (12) einen Halterahmen (15), welcher die Empfangslinse (8) in einem vorbestimmten Seitenbereich (11) umfangsseitig umgibt und den vorbestimmten Seitenbereich (11) vor optischer Strahlung abschirmt, und zumindest ein Federelement (16), welches die Empfangslinse (8) gegenüber dem Halterahmen (15) in zumindest einer von der ersten Richtung ,z, verschiedenen, zweiten Richtung ,x, y, abstützt, aufweist.

2. Linsenvorrichtung (6) nach Anspruch 1,
**dadurch gekennzeichnet, dass**
das zumindest eine Federelement (15) die in die erste Richtung ,z, wirkende Federkraft zum Halten der Empfangslinse (8) an der Stützeinrichtung (9) bereitstellt.

3. Linsenvorrichtung (6) nach einem der vorhergehenden Ansprüche,
**dadurch gekennzeichnet, dass**
die Stützeinrichtung (9) ein Halteelement (19) aufweist und die Befestigungseinrichtung (12) ein zu dem Halteelement (19) korrespondierendes Befestigungselement (20) aufweist, wobei die Empfangslinse (8) durch eine Zusammenwirken des Halteelements (19) mit dem Befestigungselement (20) in der ersten Richtung ,z, an der Stützeinrichtung (9) gehalten ist.

4. Linsenvorrichtung (6) nach Anspruch 3,
**dadurch gekennzeichnet, dass**
das Federelement (16) und/oder der Halterahmen (15) das Befestigungselement (20) umfasst.

5. Linsenvorrichtung (6) nach einem der vorhergehenden Ansprüche,
**dadurch gekennzeichnet, dass**
die Befestigungseinrichtung (12) einen Federdraht (17) aufweist, wobei zumindest ein erster Bereich (23) des Federdrahts (17) das zumindest eine Federelement (16) ausbildet.

6. Linsenvorrichtung (6) nach Anspruch 5,
**dadurch gekennzeichnet, dass**
der Halterahmen (15) zumindest eine Ausnehmung (22) aufweist, in welcher zumindest ein zweiter Bereich (24) des Federdrahts (17) derart angeordnet ist, dass dieser an dem Halterahmen (15) in der ersten Richtung ,z, gehalten ist.

7. Linsenvorrichtung (6) nach einem der Ansprüche 1 bis 4,
**dadurch gekennzeichnet, dass**
der Halterahmen (15) einteilig mit dem zumindest einen Federelement (16) ausgebildet ist.

8. Optoelektronischer Sensor (1) für ein Kraftfahrzeug mit einer Linsenvorrichtung (6) nach einem der vorhergehenden Ansprüche.

9. Optoelektronischer Sensor (1) nach Anspruch 8,
**dadurch gekennzeichnet, dass**
der optoelektronische Sensor (1) als Lidar-Sensor oder als Laserscanner ausgebildet ist.

10. Kraftfahrzeug mit einem optoelektronischen Sensor (1) nach Anspruch 8 oder 9.

11. Verfahren zum Montieren einer Linsenvorrichtung (6) für einen optoelektronische Sensor (1) eines Kraftfahrzeugs, bei welchem eine Empfangslinse (8) derart an einer Stützeinrichtung (9) angeordnet wird, dass eine Rückseite (10) der Empfangslinse (8) bereichsweise an dieser anliegt, und eine Befestigungseinrichtung (12) derart an der die Empfangslinse (8) angeordnet wird, dass die Empfangslinse (8) mit einer in eine erste Richtung ,z, wirkende Federkraft an der Stützeinrichtung (9) gehalten wird,
**dadurch gekennzeichnet, dass**
die Befestigungseinrichtung (12) einen Halterahmen (15), welcher die Empfangslinse (8) in einem vorbestimmten Seitenbereich (11) umfangsseitig umgibt und den vorbestimmten Seitenbereich (11) vor optischer Strahlung abschirmt, und zumindest ein Federelement (16), mittels welchem die Empfangslinse (8) gegenüber dem Halterahmen (15) in zumindest einer von der ersten Richtung ,z, verschiedenen, zweiten Richtung ,x, y, abstützt wird, aufweist.

## Claims

1. Lens apparatus (6) for an optoelectronic sensor (1) of a motor vehicle, comprising a reception lens (8), comprising a support device (9), on which a rear side (10) of the reception lens (8) rests in parts, and comprising a fastening device (12), by means of which the reception lens (8) is held on the support device (9) with a spring force that acts in a first direction, z,
**characterized in that**
the fastening device (12) has a holding frame (15), which circumferentially surrounds the reception lens (8) in a predetermined lateral region (11) and shields the predetermined lateral region (11) from optical radiation, and at least one spring element (16), which supports the reception lens (8) in relation to the holding frame (15) in at least one second direction, x, y, that differs from the first direction, z.

2. Lens apparatus (6) according to Claim 1,
**characterized in that**
the at least one spring element (15) provides the spring force acting in the first direction, z, for holding the reception lens (8) on the support device (9) .

3. Lens apparatus (6) according to either one of the preceding claims,
**characterized in that**
the support device (9) has a holding element (19) and the fastening device (12) has a fastening element (20) that corresponds to the holding element (19), wherein the reception lens (8) is held on the support device (9) by an interaction of the holding element (19) with the fastening element (20) in the first direction, z.

4. Lens apparatus (6) according to Claim 3,
**characterized in that**
the spring element (16) and/or the holding frame (15) comprises the fastening element (20).

5. Lens apparatus (6) according to any one of the preceding claims,
**characterized in that**
the fastening device (12) has a spring wire (17), wherein at least a first region (23) of the spring wire (17) forms the at least one spring element (16).

6. Lens apparatus (6) according to Claim 5,
**characterized in that**
the holding frame (15) has at least one recess (22), in which at least a second region (24) of the spring wire (17) is arranged in such a way that the latter is held on the holding frame (15) in the first direction, z.

7. Lens apparatus (6) according to any one of Claims 1 to 4,
**characterized in that**
the holding frame (15) has an integral embodiment with the at least one spring element (16).

8. Optoelectronic sensor (1) for a motor vehicle, comprising a lens apparatus (6) according to any one of the preceding claims.

9. Optoelectronic sensor (1) according to Claim 8,
**characterized in that**
the optoelectronic sensor (1) is embodied as a lidar sensor or as a laser scanner.

10. Motor vehicle comprising an optoelectronic sensor (1) according to Claim 8 or 9.

11. Method for assembling a lens apparatus (6) for an optoelectronic sensor (1) of a motor vehicle, in which a reception lens (8) is arranged on a support device (9) in such a way that a rear side (10) of the reception lens (8) rests thereon in parts, and a fastening device (12) is arranged on the reception lens (8) in such a way that the reception lens (8) is held on the support device (9) with a spring force that acts in a first direction, z,
**characterized in that**
the fastening device (12) has a holding frame (15), which circumferentially surrounds the reception lens (8) in a predetermined lateral region (11) and shields the predetermined lateral region (11) from optical radiation, and at least one spring element (16), by means of which the reception lens (8) is supported in relation to the holding frame (15) in at least one second direction, x, y, that differs from the first direction, z.

## Revendications

1. Dispositif de lentille (6) pour un capteur optoélectronique (1) d'un véhicule automobile, comprenant une lentille réceptrice (8), un dispositif de support (9) sur lequel une face arrière (10) de la lentille réceptrice (8) vient localement en appui, et un dispositif de fixation (12) au moyen duquel la lentille réceptrice (8) est maintenue sur le dispositif de support (9) par une force de ressort agissant dans une première direction, z,
**caractérisé en ce que** le dispositif de fixation (12) protège un cadre de maintien (15), qui entoure la lentille réceptrice (8) côté circonférence dans une zone latérale prédéterminée (11) et protège la zone latérale prédéterminée (11) d'un rayonnement optique, et présente au moins un élément ressort (16) qui soutient la lentille réceptrice (8) par rapport au cadre de maintien (15) dans au moins une deuxième direction, x, y, différente de la première direction, Z.

2. Dispositif de lentille (6) selon la revendication 1, **caractérisé en ce que** ledit au moins un élément ressort (15) fournit la force de ressort agissant dans la première direction, z, pour maintenir la lentille réceptrice (8) sur le dispositif de support (9).

3. Dispositif de lentille (6) selon l'une quelconque des revendications précédentes, **caractérisé en ce que** le dispositif de support (9) présente un élément de maintien (19), et le dispositif de fixation (12) présente un élément de fixation (20) correspondant à l'élément de maintien (19), la lentille réceptrice (8) étant maintenue sur le dispositif de support (9) par une coopération de l'élément de maintien (19) avec l'élément de fixation (20) dans la première direction, Z.

4. Dispositif de lentille (6) selon la revendication 3, **caractérisé en ce que** l'élément ressort (16) et/ou le cadre de maintien (15) comprend/comprennent l'élément de fixation (20).

5. Dispositif de lentille (6) selon l'une quelconque des revendications précédentes, **caractérisé en ce que** le dispositif de fixation (12) présente un fil métallique à ressort (17), au moins une première zone (23) du fil métallique à ressort (17) réalisant ledit au moins un élément ressort (16).

6. Dispositif de lentille (6) selon la revendication 5, **caractérisé en ce que** le cadre de maintien (15) présente au moins un évidement (22) dans lequel au moins une deuxième zone (24) du fil métallique à ressort (17) est disposée de façon à être maintenue sur le cadre de maintien (15) dans la première direction, Z.

7. Dispositif de lentille (6) selon l'une quelconque des revendications 1 à 4, **caractérisé en ce que** le cadre de maintien (15) est réalisé d'une seule pièce avec ledit au moins un élément ressort (16).

8. Capteur optoélectronique (1) pour un véhicule automobile, comprenant un dispositif de lentille (6) selon l'une quelconque des revendications précédentes.

9. Capteur optoélectronique (1) selon la revendication 8, **caractérisé en ce que** le capteur optoélectronique (1) est réalisé sous la forme d'un capteur lidar ou d'un scanner laser.

10. Véhicule automobile comprenant un capteur optoélectronique (1) selon la revendication 8 ou 9.

11. Procédé de montage d'un dispositif de lentille (6) pour un capteur optoélectronique (1) d'un véhicule automobile, dans lequel une lentille réceptrice (8) est disposée sur un dispositif de support (9) de telle sorte qu'une face arrière (10) de la lentille réceptrice (8) vient localement en appui sur celui-ci, et un dispositif de fixation (12) est disposé sur la lentille réceptrice (8) de telle sorte que la lentille réceptrice (8) est maintenue sur le dispositif de support (9) par une force de ressort agissant dans une première direction, z,
**caractérisé en ce que** le dispositif de fixation (12) protège un cadre de maintien (15), qui entoure la lentille réceptrice (8) côté circonférence dans une zone latérale prédéterminée (11), et la zone latérale prédéterminée (11) d'un rayonnement optique, et présente au moins un élément ressort (16) au moyen duquel la lentille réceptrice (8) est supportée par rapport au cadre de maintien (15) dans au moins une deuxième direction, x, y, différente de la première direction, z.
